## Europäisches Patentamt
## European Patent Office
## Office européen des brevets

(19)

(11) Veröffentlichungsnummer: **0 042 565**
**B1**

(12) **EUROPÄISCHE PATENTSCHRIFT**

(45) Veröffentlichungstag der Patentschrift:
**12.10.83**

(51) Int. Cl.³: **B 60 N 1/00**

(21) Anmeldenummer: **81104583.0**

(22) Anmeldetag: **13.06.81**

(54) **Fahrgastsitz.**

(30) Priorität: **18.06.80 DE 3022640**

(43) Veröffentlichungstag der Anmeldung:
**30.12.81 Patentblatt 81/52**

(45) Bekanntmachung des Hinweises auf die Patenterteilung:
**12.10.83 Patentblatt 83/41**

(84) Benannte Vertragsstaaten:
**AT BE CH FR GB LI NL SE**

(56) Entgegenhaltungen:
**DE-A-2 341 981**
**DE-U-6 924 823**
**US-A-3 065 030**
**US-A-4 109 959**

(73) Patentinhaber: **Ignaz Vogel GmbH & Co KG,
Fahrzeugsitze, Kleinsteinbacher Strasse 42-44,
D-7500 Karlsruhe 41-Stu (DE)**

(72) Erfinder: **Vogel, Ignaz, Kleinsteinbacher Strasse 44,
D-7500 Karlsruhe 41-Stu (DE)**

(74) Vertreter: **Trappenberg, Hans,
Postfach 1909 Wendtstrasse 1, D-7500 Karlsruhe 21 (DE)**

## Fahrgastsitz

Die Erfindung betrifft einen Fahrgastsitz zum Einbau in Land-, Wasser und Luftfahrzeuge, gebildet aus einem Sitzuntergestell, auf dem ein Sitzteil und eine mit ihm starr oder verschwenkbar verbundene Rückenlehne angebracht ist, wobei das Sitzuntergestell aus beidseitigen Stützfüssen besteht, die durch einen auf ihnen befestigten Profilstab überbrückt sind. Derartige Fahrgastsitze sind durch die DE-A-2341981 bekannt.

Fahrgastsitze müssen, über die Bedingungen für normale Sitzmöbel, wie Sitzkomfort und ansprechendes Äussere, hinaus, auch «betriebssicher» sein. Dies heisst, dass diese Fahrgastsitze, die ja wesentlich härteren Beanspruchungen ausgesetzt sind, äusserst stabil sein müssen, dass sie trotzdem in der Lage sein müssen, Aufprallenergie splitterfrei nachgebend aufzunehmen, dass sie auch nach langen Betriebszeiten noch klapperfrei sein müssen und dass sie trotz allem nur ein geringes Gewicht aufweisen dürfen. Eine weitere wichtige Forderung ist die der wirtschaftlichen Herstellbarkeit der Fahrgastsitze, wie auch deren wirtschaftlicher Betrieb, durch die Möglichkeiten der Auswechslung von Verschleissteilen. Auch sollen diese Fahrgastsitze in den betreffenden Fahrzeugen einfach zu montieren und den dortigen beziehungsweise den gewünschten Platzverhältnissen anzupassen sein. Eine weitere Forderung, die aus dem Zwang zur Wirtschaftlichkeit und damit zur Herstellung grosser Stückzahlen resultiert, ist, dass die Fahrzeugsitze ein möglichst geringes Versandvolumen aufweisen sollen, dass sie also weitestgehend in Einzelteile zerlegt zu versenden sind.

Diesen gesamten Forderungen wurden die bisher bekannten Fahrgastsitze nicht gerecht. Unter Hintanstellung der anderen Forderungen wurden diese Fahrgastsitze vielmehr so stabil aufgebaut, dass sie mit Sicherheit über die gesamte Standzeit der Fahrzeugsitze den an sie gestellten Festigkeitsanforderungen genügten und auch nach langer Gebrauchsdauer noch klapperfrei waren. Daraus resultierten jedoch nicht nur teure, sondern auch verhältnismässig schwere Fahrgastsitze, so dass die Fahrzeuge immer ein recht hohes Totgewicht mitschleppen mussten.

Aufgabe der Erfindung ist es daher, einen Fahrgastsitz der beschriebenen Art anzugeben, der die oben angeführten Forderungen in ihrer Gesamtheit erfüllt. Dies wird nach der Erfindung dadurch erreicht, dass mindestens zwei Profilstäbe vorgesehen sind, die ein Doppel-C-Profil aufweisen, dessen Steg etwa parallel zur Sitzplattenebene angeordnet ist. In Weiterbildung der Erfindung wird sodann auf den Profilstäben eine Sitzplatte und eine mit ihr verbundene Rückenplatte angebracht, wobei sowohl die Sitzplatte, wie auch die Rückenplatte jeweils aus zwei Tragrohren gebildet sind, die bei den Kanten je einer Montageplatte angebracht sind und die Tragrohre der Rückenplatte verschwenkbar oder starr mit denjenigen der Sitzplatte verbunden sind und auf den Montageplatten einerseits Polsterteile und andererseits Sitz-Zusatzteile und Abdeckteile anbringbar sind.

Nicht mehr also wie bei der bisherigen Herstellungsweise werden Fahrgastsitze für einen bestimmten Verwendungszweck, für ein bestimmtes Fahrzeug und für bestimmte Platzverhältnisse gebaut, sondern es wird ein Sitzuntergestell angegeben, auf dem Montageplatten zu befestigen sind, die nun ihrerseits mit beliebigen Sitzteilen zu bestücken sind. Durch die Verwendung der Doppel-C-Profilstäbe können die auf ihnen anzubringenden Sitze ohne Schwierigkeiten seitlich verschoben werden, so dass sie den geforderten Platzverhältnissen angepasst werden können. Zwar ist bereits bei der Fahrzeugsitzkonstruktion nach der DE-A-2341981 bekannnt geworden, zwei Stützfüsse vorzusehen und einen Profilstab, der als Tragbalken die beiden Stützfüsse überbrückt. An diesem einen Tragebalken sind nun der Fahrzeugsitz beziehungsweise die Fahrzeugsitze zu befestigen, wobei selbstverständlich, insbesondere zur Aufnahme des Drehmoments der Tragbalken verhältnismässig schwer ausgeführt werden muss. Auch sollen auf dieses aus den Stützfüssen mit Tragbalken bestehenden Untergestell komplette Sitze aufgebaut werden, die wiederum individuell den einzelnen Zwecken anzupassen sind. Durch die Möglichkeit des Aufbaus verschiedener Sitzarten auf den Sitz- beziehungsweise Rückenmontageplatten nach der Erfindung hingegen, was durch die Verwendung der zwei Profilstäbe mit dem Doppel-C-Profil ermöglicht ist, können nicht nur die jeweils gewünschten Sitze unschwer montiert werden, sondern es ergibt sich dadurch auch die Möglichkeit, Verschleissteile ohne Schwierigkeiten, d.h. ohne grossen Lohn- und Zeitaufwand, auszuwechseln. Da sich der gesamte Fahrgastsitz nach der Erfindung aus einzelnen Bauelementen zusammenfügen lässt, ist selbstverständlich auch die Möglichkeit gegeben, diese einzelnen Bauelemente bei kleinstem Verpackungsvolumen zu versenden. Diese preiswerte Versendungsmöglichkeit besteht daher nicht nur für die gesamten, in Einzelteile zerlegten Fahrgastsitze, sondern ebenso auch für nachzusendenden Verschleissteile. Die Festigkeit des Fahrgastsitzes nach der Erfindung ergibt sich einmal durch die besondere Ausführung des Sitzuntergestells mit Doppel-C-Profilstäben, wie auch durch die Verbindung der Tragrohre mit den Montageplatten. Zu beachten ist, dass die Profilstäbe auf den Stützfüssen so angeordnet werden können, dass sie sowohl gleichmässig das zu erwartende Gewicht aufnehmen können, jedoch auch gleichzeitig, durch den Abstand voneinander, in der Lage sind, auch verhältnismässig hohe Drehmomente zu übernehmen, die beispielsweise beim Aufprall von Fahrgästen auf die Rückenlehne entstehen. Hierbei können die Profilstäbe so ausgewählt und angeordnet sein, dass sie sich bei Überschreitung eines gewissen Drehmomentes unter Energieabsorption deformieren und somit Verletzungen von auf die Rückseite der Sitze geschleuderten Personen verhindern.

Bei der Ausbildung der Sitzteile und der Rückenlehne wurde auf die bisher für notwendig erachtete Querverbindung der Tragrohre verzichtet; die Festigkeit dieser Bauelemente wird dadurch erreicht, dass die Tragrohre an den Kanten der Montageplatten angebracht sind. Diese Festigkeit genügt durchaus den an solche Fahrgastsitze zu stellenden Festigkeitsanforderungen, lässt jedoch, insbesondere durch die Materialwahl der Montageplatten, eine Deformierung und damit wiederum die Absorption von Aufprallenergie im Notfalle zu.

Ohne weitere Verbindungsstelle können nunmehr diese «Basissitze» mit den Polsterteilen beziehungsweise dem notwendigen Sitz-Zubehör ausgestattet werden. So können auf den Montageplatten nicht nur die Sitzteile, zweckmässigerweise durch Klemmen, befestigt werden, sondern auch die die Montageplatten abdeckenden Abdeckteile, die ihrerseits, insbesondere im Bereich der Rückenlehne, so ausgeführt werden können, dass sie ebenfalls zur Absorption von Aufprallenergie dienen. Gleichzeitig können die üblicherweise vorgesehenen Haltegriffe, Aschenbecher, Ablagenetze und Tischplatten etc. an den Montageplatten angebracht werden. Zu erwähnen ist auch, dass Haltestangen, Haltegriffe und auch Armlehnen, ebenfalls auf den Profilstäben des Sitzuntergestells, wiederum jeweils in der gewünschten Position, angebracht werden können. Ebenfalls ist auch die Anbringung einer Kopfstütze unschwer möglich, indem auf die oberseitigen Enden der Rückenplatten-Tragrohre ein Brückentragrohr aufgesteckt und an diesem die Kopfstütze befestigt wird.

Die Erfindung kennzeichnet damit ein Fahrgastsitz-System, das universell für die verschiedensten Fahrgastsitz-Typen Verwendung finden, wie auch in die unterschiedlichsten Fahrzeuge bei entsprechend unterschiedlichem Platzangebot eingebaut werden kann. Hierbei ist dieses Fahrgastsitz-System nicht nur universell einsetzbar, sondern es ist durch seine besondere Ausbildung auch leicht, wirtschaftlich herstellbar, einfach zu montieren, unschwer zu versenden und auf einfachste Weise instand zu halten.

Auf der Zeichnung ist ein Ausführungsbeispiel eines Fahrgastsitzes nach der Erfindung schematisch dargestellt, und zwar zeigen:

Fig. 1 eine Seitenansicht und
Fig. 2 eine Draufsicht auf einen Fahrgastsitz,
Fig. 3 die Teilansicht eines Profilstabes.

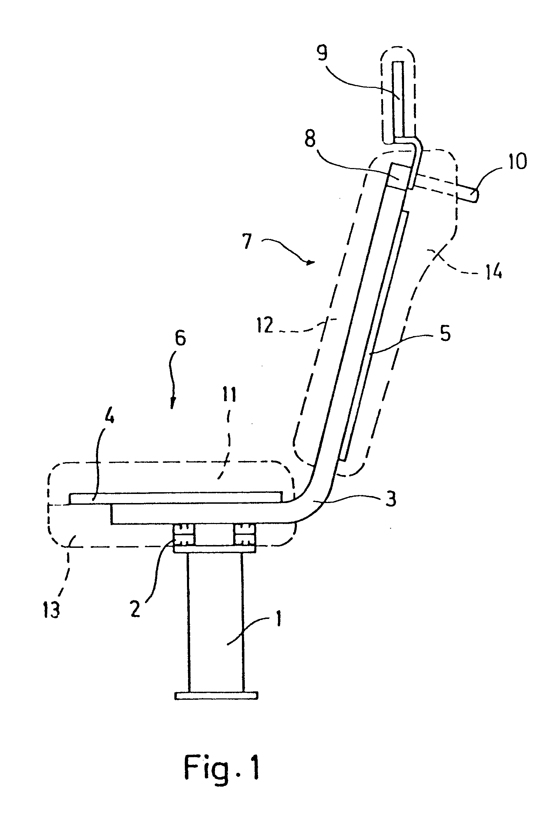

Auf Stützfüssen 1 sind mit Abstand voneinander zwei Doppel-C-Profilstäbe 2 angeordnet. Auf diesen Profilstäben 2 sind Tragrohre 3 befestigt, die mit Montageplatten 4, 5 für das Sitzteil 6 beziehungsweise die Rückenlehne 7 verbunden sind. Die oberseitigen Enden der Tragrohre 3 sind durch ein Brückentragrohr 8 miteinander verbunden. An diesem Brückentragrohr 8 ist eine Kopfstütze 9 sowie ein Handgriff 10 befestigt. Auf den Montageplatten 4, 5 sind Polsterteile 11, 12 für das Sitzteil 6 und die Rückenlehne 7 (Fig. 1) angebracht, wie auch Abdeckteile 13, 14.

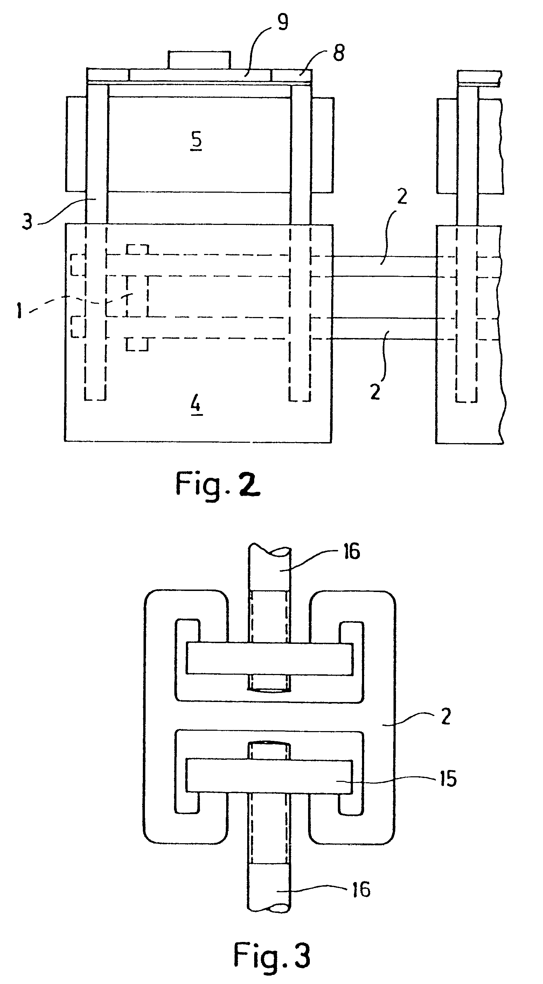

In der Detailzeichnung nach Fig. 3 ist die Befestigung der Doppel-C-Profilstäbe 2 auf den Stützfüssen 1, wie auch diejenige der Tragrohre 3 auf den Profilstäben 2, gezeigt. In die Doppel-C-Profilstäbe 2 sind Gewindeplatten 15 eingeschoben, in die Schraubenbolzen 16 einzuschrauben sind. Durch diese besondere Form des Profilstabes 2 ist es möglich, sowohl die Stützfüsse an beliebiger Stelle der Profilstäbe 2 anzubringen und damit die Montage des Sitzuntergestells den jeweils vorliegenden Platzverhältnissen anzupassen, wie auch die Tragrohre 3 und damit die Sitze ebenfalls dort zu befestigen, wo sie jeweils gewünscht werden. Hervorzuheben ist, dass die Befestigung der Stützfüsse an den Profilstäben, wie auch diejenige der Sitzteile, vollkommen unabhängig voneinander erfolgen kann. Damit ist die universelle Anwendbarkeit dieses Fahrgastsitz-Systems gewährleistet.

**Patentansprüche**

1. Fahrgastsitz zum Einbau in Land-, Wasser- und Luftfahrzeuge, gebildet aus einem Sitzuntergestell, auf dem ein Sitzteil (6) und eine mit ihm starr oder verschwenkbar verbundene Rückenlehne (7) angebracht ist, wobei das Sitzuntergestell aus beidseitigen Stützfüssen (1) besteht, die durch einen auf ihnen befestigten Profilstab (2) überbrückt sind, dadurch gekennzeichnet, dass mindestens zwei Profilstäbe (2) vorgesehen sind, die ein Doppel-C-Profil aufweisen, dessen Steg etwa parallel zur Sitzplattenebene angeordnet ist.

2. Fahrgastsitz nach Anspruch 1, dadurch gekennzeichnet, dass auf den Profilstäben (2) eine Sitzplatte und eine mit ihr verbundene Rückenplatte anbringbar sind, wobei die Sitzplatte und die Rückenplatte jeweils aus zwei Tragrohren (3) gebildet sind, die bei den Kanten je einer Montageplatte (4, 5) angebracht sind und die Tragrohre (3) der Rückenplatte verschwenkbar oder starr mit denjenigen der Sitzplatte verbunden sind und auf den Montageplatten (4, 5) einerseits Polsterteile (11, 12) und andererseits Sitz-Zusatzteile und Abdeckteile (13, 14) anbringbar sind.

3. Fahrgastsitz nach Anspruch 1 oder 2, dadurch gekennzeichnet, dass die Kanten des C-Profils zum Steg hin abgekantet sind.

4. Fahrgastsitz nach Anspruch 2 oder 3, dadurch gekennzeichnet, dass die Profilstäbe (2) aus Leichtmetall sind.

5. Fahrgastsitz nach Anspruch 1, dadurch gekennzeichnet, dass in das Doppel-C-Profil einschiebbare Gewindeplatten (15) vorgesehen sind.

6. Fahrgastsitz nach Anspruch 1, dadurch gekennzeichnet, dass die Montageplatten (4, 5) Holzplatten sind.

7. Fahrgastsitz nach Anspruch 1, dadurch gekennzeichnet, dass die Montageplatten (4, 5) Kunststoffplatten sind.

8. Fahrgastsitz nach Anspruch 7, dadurch gekennzeichnet, dass die Kunststoffplatten mit eingeformten Befestigungselementen versehen sind.

9. Fahrgastsitz nach Anspruch 1, dadurch gekennzeichnet, dass die Montageplatten Sandwichplatten sind.

10. Fahrgastsitz nach Anspruch 1, dadurch gekennzeichnet, dass ein auf die oberseitigen Enden der Rückenplatten-Tragrohre (13) aufsteckbares Brückentragrohr (8) vorgesehen ist.

11. Fahrgastsitz nach Anspruch 10, dadurch gekennzeichnet, dass an dem Brückentragrohr (8) eine Kopfstütze (9) befestigbar ist.

## Revendications

1. Siège de passager pour l'installation dans des véhicules terrestres, aquatiques et aériens, formé d'un soubassement de siège sur lequel sont disposés une assise (6) et un dossier (7) relié à celle-ci de façon rigide ou avec possibilité de pivotement, le soubassement de siège étant formé de pieds d'appui bilatéraux (1) qui sont pontés par une barre profilée (2) qui leur est fixée, caractérisé en ce qu'il est prévu au moins deux barres profilées (2), qui présentent un profil en double C, dont l'âme est disposée à peu près parallèlement au plan de la plaque de siège.

2. Siège de passager selon la revendication 1, caractérisé en ce que sur les barres profilées (2) peuvent être disposées une plaque de siège et une plaque de dos, qui lui est reliée, la plaque de siège et la plaque de dos étant formées chacune de deux tubes porteurs (3), qui sont disposés chacun aux bords d'une plaque de montage (4, 5), et les tubes porteurs (3) de la plaque de dos sont reliés avec possibilité de coulissement ou rigidement à ceux de la plaque de siège, et sur les plaques de montage (4, 5) peuvent être disposées, d'une part, des parties de coussin (11, 12) et, d'autre part, des parties additionnelles de siège et des parties de recouvrement (13, 14).

3. Siège de passager selon l'une des revendications 1 ou 2, caractérisé en ce que les bords du profil en C sont coudés en direction de l'âme.

4. Siège de passager selon l'une des revendications 2 ou 3, caractérisé en ce que les barres profilées (2) sont en métal léger.

5. Siège de passager selon la revendication 1, caractérisé en ce que des plaques filetées (15) sont prévues et peuvent s'insérer dans le profil en double C.

6. Siège de passager selon la revendication 1, caractérisé en ce que les plaques de montage (4, 5) sont des plaques de bois.

7. Siège de passager selon la revendication 1, caractérisé en ce que les plaques de montage (4, 5) sont des plaques de matière synthétique.

8. Siège de passager selon la revendication 7, caractérisé en ce que les plaques de matière synthétique sont munies d'éléments de fixation moulés solidairement.

9. Siège de passager selon la revendication 1, caractérisé en ce que les plaques de montage sont des plaques en sandwich.

10. Siège de passager selon la revendication 1, caractérisé en ce qu'il est prévu un tube porteur de pont (8) pouvant se glisser sur les extrémités supérieures des tubes porteurs de plaque de dos (13).

11. Siège de passager selon la revendication 10, caractérisé en ce qu'au tube porteur de pont (8) peut se fixer un appui-tête (9).

## Claims

1. Passenger seat for installation in land vehicles, watercraft and aircraft, formed of a seat underframe, on which a seat part (6) and a backrest (7) rigidly or pivotably joined thereto are fitted, the seat underframe consisting of support feet (1) on both sides, which are bridged by a profile bar (2) fixed thereto, characterised in that at least two profile bars (2) are provided, which have a double-C-profile, the web of which is arranged approximately parallel to the plane of the seat board.

2. Passenger seat according to Claim 1, characterised in that a seat board and a back board joined thereto can be fitted on the profile bars (2), the seat board and the back board each being formed from two carrier tubes (3) which are each fitted at the edges of a mounting plate (4, 5), and the carrier tubes (3) of the back board being pivotably or rigidly jointed to those of the seat board, it being possible for upholstery parts (11, 12) on the one hand and seat accessories and cover parts (13, 14) on the other hand to be fitted on the mounting plates (4, 5).

3. Passenger seat according to Claim 1 or 2, characterised in that the edges of the C-profile are bent towards the web.

4. Passenger seat according to Claim 2 or 3, characterised in that the profile bars (2) consist of a light metal.

5. Passenger seat according to Claim 1, characterised in that threaded plates (15) are provided which can be inserted into the double-C-profile.

6. Passenger seat according to Claim 1, characterised in that the mounting plates (4, 5) are wooden plates.

7. Passenger seat according to Claim 1, characterised in that the mounting plates (4,5 ) are plastic plates.

8. Passenger seat according to Claim 7, characterised in that the plastic plates are provided with moulded-in fixing elements.

9. Passenger seat according to Claim 1, characterised in that the mounting plates are sandwich boards.

10. Passenger seat according to Claim 1, characterised in that a bridge carrier tube (8) is provided which can be fitted over the upper ends of the back board carrier tubes (13).

11. Passenger seat according to Claim 10, characterised in that a headrest (9) can be fixed to the bridge carrier tube (8).

Fig.1

0 042 565

Fig. **2**

Fig. 3

9